# EUROPEAN PATENT APPLICATION

(11) **EP 4 507 245 A1**
(43) Date of publication of application: **12.02.2025**
(21) Application number: 24153946.9
(22) Date of filing: 25.01.2024
(51) Int. Cl.: H04L 9/08, H04L 9/32, H04L 9/00, H04M 7/00

(54) **SYSTEM AND MANAGEMENT METHOD OF THE DECENTRALIZED DIGITAL IDENTITIES**

(30) Priority: 10.08.2023 RO 202300447
(71) Applicant: CryptoDATA Tech S.r.l., 077190 Voluntari Ilfov (RO)
(72) Inventor: BARLIGA, Sebastian, 50030 Brasov (RO); COCORU, Dumitru, 040042 Bucharest (RO); VAJAIALA-TOMICI, Catalin-Mihai, 140047 Alexandria (RO)
(74) Representative: Reich, Jochen

(57) **Abstract**

The invention relates to a system and method for the management of decentralized digital identities, used in a distributed environment for making virtual transactions, document transfer and encrypted communication in a secure and integral way. The system works on the basis of blockchain technology and includes: a token-type hardware device (DH) capable of generating and storing encryption keys associated with decentralized identities (IDs), a mapping module (MAP) for correspondence between email addresses and decentralized digital identities (IDs), a communication module (MC) for blockchain-encrypted email and chat, a compliance module (MConf) for EU identity recognition, a decentralized identity module (MID) for identity management through blockchain and an authentication module (AUT) that combines two-step authentication with one-time authentication. The method involves enrolling users, generating decentralized identities, authenticating through blockchain, and making virtual transactions using decentralized identities in a distributed system.

## Description

The invention relates to a system and method for managing the decentralized digital identities, intended for the interconnection of users in a distributed system, for the purpose of virtual transactions, document transfer and internal communication through encrypted e-mail and chat services.

In the digital age, security and identity verification are essential, but current systems face significant vulnerabilities. From identity fraud and censorship to the risks related to password management and cryptocurrency wallet security, there is an urgent need for innovation in this area.

The solution presented in the patent application WO 2022/248404A1, published on 01.12.2022 - "A method for managing a digital identity" is known from the state of the art. The patent application presents a method of managing a digital identity of an entity in a decentralized manner. For this, a domain for the entity is used, accompanied by a secure certificate and directed to one or more servers. Access rules are defined for digital identities, and access to stored data is achieved through secure peer-to-peer connections in a distributed global network. The resulting system is a distributed network of entities, each with at least one related digital identity. The resulting method and system can be used in a social environment, a messaging network, or even a distributed cryptocurrency system. They also facilitate the exchange of data between users, increasing privacy and control over information.

The solution presented in patent application WO 2022/148765A1, published on 14.07.2022 - "Method and system for managing digital, electronic communication" is also known from the state of the art. The patent application discloses a method of managing electronic communication in a decentralized manner based on blockchain technology. A user creates an account on a communication service, and his communication actions are recorded as transactions on a blockchain associated with a specific token. The central server can read these transactions and provide priority information based on them. The system and method presented provide a secure and transparent management and the monitoring of digital communication between users. eIDAS is known in the art and stands for Electronic Identification, Authentication and Trust Services. The eIDAS Regulation created the framework to ensure that electronic interactions between companies are safer, faster and more efficient, regardless of the European country in which they take place.
The solutions known from the state of the art have two important disadvantages. On the one hand, without implementing an additional security measure, private keys used in blockchain systems or identity management methods can be vulnerable to attacks and data theft. On the other hand, without the use of a technical compliance solution, the scalability of the solutions presented in the prior art is limited and dependent on the geographical area in which they are implemented.

In general, traditional centralized communication systems, including VoIP (Voice over IP)
and email, known in the art have the following disadvantages:
- create a single point of failure: if the central server stops, the entire system can be disrupted;
- raise privacy issues: the central server has access to all the data that passes through it;
- the central server is a target for hackers and malicious persons who want to intercept or manage data;
- central servers can be subject to surveillance and censorship, limiting freedom of expression and access to information. WebRTC-based communication systems such as WhatsApp, Signal and others can easily be blocked by authorities;
- performance issues: if a large number of users try to access the server at the same time, it can become overloaded generating delays or data loss or, depending on the geographical distance between the server and the client, high latencies;
- identity theft and phishing attacks are more likely to succeed because identity checking is done through traditional authentication methods, such as the use of passwords. In addition, the server has access to user credentials, which is a major vulnerability for data privacy and security;
- it is difficult to verify that a message comes from the person who claims to have sent it.
This can lead to trust issues and allow man-in-the-middle attacks;
- without a secure way to verify that the data has not been tampered with, users cannot be sure that the information they receive is accurate and reliable;
- are vulnerable to "Denial of Service" (DoS) attacks that can flood the server with unnecessary traffic that can lead to service interruptions and prevent users from communicating.
- In order to overcome the shortcomings of the solutions identified in the prior art, the present invention introduces a decentralized protocol for communication and authentication, that uses blockchain technology for securing and checking the identity. By removing the dependency on centralized systems and single points of failure, the protocol proposed provides a robust and attack-resistant solution. Integrating advanced solutions for cold wallet storage and decentralized authentication, this protocol gives users full control and sovereignty over their own data and assets.
- The present invention provides a viable alternative to the centralized methods that currently dominate the technological landscape. With its potential to revolutionize the way we communicate and protect our data, the decentralized protocol paves the way for a safer and freer digital future.
- In the context of the present invention the following standards are to be understood as follows:
   FIPS 140 - The Federal Information Processing Standard Publication 140-2, is a U.S. government computer security standard used to approve cryptographic modules. FIPS 140-2 defines four levels of security, simply named "Level 1" to "Level 4". It does not specify in detail what level of security is required by any particular application. Security Level 1 provides the lowest level of security. Basic security requirements are specified for a cryptographic module (e.g., at least one Approved algorithm or Approved security function shall be used). An example of a Security Level 1 cryptographic module is a personal computer (PC) encryption board. Security Level 2 improves upon the physical security mechanisms of a Security Level 1 cryptographic module by requiring features that show evidence of tampering, including tamper-evident coatings or seals that must be broken to attain physical access to the plaintext cryptographic keys and critical security parameters (CSPs) within the module. Using a FIPS 140-2 certified System on Chip (SoC) for encryption, decryption, and private key storage in our patent is pivotal because it immediately establishes a high standard of security and trust. This certification assures that the SoC meets rigorous federal standards for cryptographic security, ensuring robust protection against physical and logical attacks.
   BIP-32 - is the Bitcoin Improvement Proposal (BIP number 32) which introduced the standard of Hierarchical Deterministic (HD) wallets and extended keys to Bitcoin. A Hierarchical Deterministic (HD) wallet is the term used to describe a wallet which uses a seed to derive public and private keys. HD wallets were implemented as a Bitcoin standard with BIP 32. Before this, most wallets generated unrelated keys each time a user required a new address. This format, called a Just-a-Bunch-of-Keys (JBOK) wallet, required the wallet to backup each key individually, a significant inconvenience for both wallets and users. HD wallets can be backed up by storing a single seed of 64 bytes.
   BIP -39 - is the Bitcoin Improvement Proposal (BIP number 39) which introduced the standard of mnemonic phrases. Mnemonic phrases offer a standardized method for converting a seed into a series of 12-24 words. Thus, a mnemonic phrase is all that is needed to recover all private keys of a wallet. A mnemonic phrase is a list of 12-24 words used to back up a wallet. This phrase is a representation of a seed, which is the data that generates all of the keys in an HD wallet. A mnemonic phrase is also sometimes referred to as a seed phrase or recovery phrase. Mnemonic words are chosen from a defined list of 2048 words, and any combination of words is a valid mnemonic phrase which will generate a valid set of keys. Thus, the probability of correctly guessing someone's mnemonic phrase is 1 in 2048^24 or 2.96 x 10^79 guesses.
      We chose to integrate BIP-32 and BIP-39 into our patent for a wallet storing keys on a FIPS 140-2 SOC hardware due to their synergistic enhancement of security and user convenience: BIP-32's Hierarchical Deterministic wallets streamline key management and backup with a single seed, while BIP-39's mnemonic phrases transform this seed into an easily recoverable and user-friendly format, ensuring robust security and effortless recovery of digital assets.
   ICE - STUN, TURN, and ICE are a set of IETF standard protocols for negotiating traversing NATs when establishing peer-to-peer communication sessions. WebRTC and other VoIP stacks implement support for ICE to improve the reliability of IP communications. Interactive Connectivity Establishment (ICE) is a blanket standard that describes how to coordinate STUN and TURN to make a connection between hosts. STUN & TURN - A host uses Session Traversal Utilities for NAT (STUN) to discover its public IP address when it is located behind a NAT/Firewall. When this host wants to receive an incoming connection from another party, it provides this public IP address as a possible location where it can receive a connection. If the NAT/Firewall still won't allow the two hosts to connect directly, they make a connection to a server implementing Traversal Using Relay around NAT (TURN), which will relay media between the two parties. DID - Decentralized identifiers (DIDs) are a new type of identifier that enables verifiable, decentralized digital identity. A DID refers to any subject (e.g., a person, organization, thing, data model, abstract entity, etc.) as determined by the controller of the DID. In contrast to typical, federated identifiers, DIDs have been designed so that they may be decoupled from centralized registries, identity providers, and certificate authorities.WebRTC - Web Real-Time Communication (WebRTC) is a free and open-source project providing web browsers and mobile applications with real-time communication (RTC) via application programming interfaces (APIs). It allows audio and video communication to work inside web pages by allowing direct peer-to-peer communication, eliminating the need to install plugins or download native apps. Although initially developed for web browsers, WebRTC has applications for non-browser devices, including mobile platforms and IoT devices. Examples include browser-based VoIP telephony, also called cloud phones or web phones, which allow calls to be made and received from within a web browser, replacing the requirement to download and install a softphone.
   TPM - Trusted Platform Module (TPM) secure boot is a security feature designed to protect the operating system from tampering. It utilizes a hardware-based approach, where the TPM chip ensures that the system boots securely by verifying the integrity of the boot process. This is achieved by checking if the system's bootloaders and firmware are signed with a trusted certificate, ensuring they have not been altered or corrupted. By leveraging TPM for secure boot, the system is safeguarded against unauthorized modifications, thereby providing a robust defense against a range of security threats that target the operating system's integrity.
   SDK - A software development kit (SDK) is a collection of software development tools in one installable package. They facilitate the creation of applications by having a compiler, debugger and sometimes a software framework. The Cosmos SDK is an open-source framework for building multi-asset public Proof-of-Stake (PoS) blockchains, as well as permissioned Proof-of-Authority (PoA) blockchains. One development paradigm in the blockchain world today is that of virtual-machine blockchains like Ethereum, where development generally revolves around building decentralized applications on top of an existing blockchain as a set of smart contracts. Application-specific blockchains offer a radically different development paradigm than virtual-machine blockchains. An application-specific blockchain is a blockchain customized to operate a single application: developers have all the freedom to make the design decisions required for the application to run optimally.
- The present invention solves the technical issue of securing private keys used in blockchain systems simultaneously with managing digital identities in a decentralized and global manner, in an efficient and scalable manner.
- The decentralized digital identity management system, according to the present invention, removes the above-mentioned disadvantages working on the basis of blockchain technology and consisting of the following functional modules:
   - a hardware device represented by a physical device of token type, capable of generating and storing public and private keys associated with the digital identity of at least one user, hardware device that connects to the personal mobile terminal of the user who wants to generate an identity decentralized digital;

   - a mapping module that has the role of carrying out correspondence between users' e-mail addresses with decentralized digital identities / decentralized identifiers;
   - a communication module dedicated to managing the creation, sending and receiving of encrypted e-mails and chats through the blockchain network and based on the encryption made using the public and private keys stored on the token-type hardware device;
   - a compliance module provided with eIDAS that provides the recognition of digital identities created and managed, according to the invention, by public services from other member states of the European Union;
   - a decentralized identity module that manages the creation, updating and deletion of decentralized identities using blockchain technology by relating a DID type document with a did: com address, a document containing information related to the user's identity and used to verify his authenticity and credentials, and
   - an authentication module that combines two-step authentication and one-time authentication that allows the secure management of decentralized identities and encrypted communication.
- In a preferred embodiment, the system hardware allows cryptographic operations to be performed without revealing the value of the encryption key itself, thereby providing an additional level of protection.
- In another preferred embodiment, each of the users' digital identities managed by the system according to the invention is linked to a pair of cryptographic keys, consisting of a private key, kept safe within the FIPS 140-certified security key 02, used to sign transaction requests, and a public key, used by the nodes of the blockchain network, to verify the digital signature.
- In another preferred embodiment, the blockchain wallet address within the decentralized identity module is used as the did:com identifier , the system leverages the inherent security features of blockchain technology. This includes immutability, where once data is recorded, it cannot be altered or deleted, and decentralization, which eliminates single points of failure and reduces the risk of attacks or unauthorized access. Adopting a blockchain wallet address as the *did:com:waleltID* identifier empowers users with more control over their digital identities. They can manage their identity independently without reliance on central authorities. This aligns with the core philosophy of decentralized identities, where users have the sovereignty to control their own identity data, including how and with whom it is shared.
- Advantageously, the document containing information related to a decentralized identity is stored on the blockchain and can be accessed and verified by any user of the network.

In an alternative embodiment, the authentication module uses a security key via WebAuthn and verifies the identity of a user using the document containing the information related to a decentralized identity stored on the blockchain. This approach is increasingly vital in our current era, where data breaches are frequent and traditional passwords are regularly compromised and exposed online. Passwordless authentication, as facilitated by WebAuthn, represents the future of secure access, eliminating the weakest link in most security systems - the password. By leveraging cryptographic login credentials and hardware-based security keys, our system offers a more robust defense against phishing, man-in-the-middle attacks, and credential theft.
- Advantageously, the storage of security keys is done in a physical environment, isolated from the Internet and other potentially compromised networks, and the cryptographic operations performed do not reveal the value of the key itself. This ensures the highest level of security against cyber threats, including hacking and remote cyber-attacks. This method of 'air-gapping' the keys protects them from unauthorized online access and network-based vulnerabilities.
- In a preferred embodiment, the hardware device is compatible with a variety of devices and platforms and, via an encrypted Bluetooth connection, can communicate with mobile phones, tablets, computers and other compatible devices. This seamless connectivity and cross-platform compatibility are essential for ensuring that our solution can be easily integrated into various user environments, enhancing its practicality and user adoption. By prioritizing interoperability, we not only cater to a wider user base but also enable a more flexible and versatile user experience
- The method of managing decentralized digital identities, according to the invention, removes the previously mentioned disadvantages in that it involves the following operational steps:
   - the enrollment of the user and the generation of decentralized identities is carried out by using the hardware device and installing an electronic wallet-type mobile application that represents the access point for users to a blockchain-type network and the identity management system;
   - the user is authenticated and authorized, using the public key stored in the blockchain registry and associated with the decentralized identity created in the previous step for verifying the digital signature;
   - the interaction with the blockchain network is carried out through the mobile application that allows the user to send and receive transactions, to manage decentralized identities and to mperform other operations specific to the blockchain;
   - virtual transactions of users authenticated in the previous step are carried out, including the use of e-mail and/or chat services, document transfer, virtual currency trading, all of which are carried out with assuring their integrity and confidentiality;
   - transactions are signed by using the mobile application that sends the data to the cold wallet, either through a physical connection or through a Bluetooth wireless connection; the cold wallet signs the transaction using the securely stored private key and sends the signature back to the mobile app;
   - the transactions signed are sent to the blockchain network where each transaction is verified and recorded in the network nodes;
   - periodic synchronization of the mobile application with the blockchain network is carried out to reflect the current state of the account, transactions and decentralized user identities;
   - the connection with the cold wallet is safely closed after the transactions are completed.
- In another preferred embodiment, the users of the system according to the method of the present invention can assign one or more email addresses for their own decentralized identity and search for decentralized identities of other users by entering at least one email address by using the mapping module.
- Advantageously, the mobile application according to the method of the present invention allows the users to manage decentralized identities and initiate and receive WebRTC communications via the VOBP protocol, using blockchain network nodes as TURN servers. Playing a pivotal role in protecting freedom of speech and combating censorship. This approach ensures a high degree of privacy and security for communications, leveraging the decentralized and immutable nature of blockchain technology. By using blockchain nodes for connection management in WebRTC communications, the system significantly reduces the risk of interception or censorship by centralized authorities, it empowers users to communicate freely and securely, making it a powerful tool in safeguarding freedom of expression and resisting efforts to suppress or monitor speech, especially in regions where these rights are under threat.
- In an alternative embodiment, the mobile application according to the method of the present invention may request the cold wallet to generate and manage keys, provide a secure random number, and perform other cryptographic operations, all in accordance with relevant standards. The importance of a secure random number generator (RNG) in cryptography cannot be overstated, as the strength of cryptographic keys and, by extension, the security of the entire system, hinges on the randomness of these numbers. A truly random number ensures unpredictability and reduces vulnerabilities, making it exponentially more difficult for attackers to guess or reproduce the cryptographic keys. When cryptographic operations, like transaction signing, are performed offline in a cold wallet, the exposure of private keys is minimized. Since the keys never leave the device or are exposed to a potentially compromised computer, the risk of key theft via malware or software exploits is greatly reduced.
- In a preferred embodiment of the invention, generating a decentralized identity according to the method involves the following steps:
   a mnemonic is generated according to the standardized BIP-39 algorithm using the capabilities of the security key to generate random numbers; the mnemonic is transformed into a cryptographic seed using a hash function and possibly an additional password;
   - the seed is used to derive a master key using the BIP-32 algorithm; the master key will be the root of the key hierarchy for the decentralized identity wallet;
   - using the main key and the specific structure of the Cosmos SDK blockchain, a unique DID address is generated;
   - a DID document is created that contains information related to the user's identity, including public keys, associated services and other metadata;
   - the DID document is digitally signed with the associated private key and sent to the blockchain; the blockchain will act as a registry for all DID documents;
   - blockchain nodes verify the signature and integrity of the DID document and record it in the blockchain to ensure the immutability and transparency of decentralized identities;
   - the user can manage and update the DID document through the wallet that manages decentralized identities, using the security key and the proposed protocol for authentication and cryptographic operations.
- Advantageously, the integration of WebRTC technology with blockchain technology is achieved, according to the present method, through two essential components: signaling, to establish peer-to-peer connections in WebRTC, and ICE candidate collection, to improve NAT traversal and make the network more resistant to blocking and censorship.
- In a preferred embodiment of the invention, the method uses a specific hardware component, a security key that implements a TPM from a FIPS 140-02 approved SoC chip, to implement the mobile wallet application. Incorporating a TPM from a FIPS 140-2 approved SoC chip into the mobile wallet application thus provides a solid foundation for a secure, reliable, and trustworthy digital wallet. This approach aligns with the increasing demand for higher security standards in financial technology and digital asset management.In another preferred embodiment, the integration of WebRTC technology, according to the present method, is done by following the following operational steps:
   - a user initiates a communication request, for example, a video call, to another user through the application that implements the VOBP protocol;
   - each blockchain node acts as a TURN server, replacing traditional TURN servers;
   - the initiating user generates an SDP offer and sends it to the recipient via the blockchain, using the specific did:com: identifier;
   - both users authenticate each other using the decentralized authentication method, involving the security key and the decentralized identity module;
   - the receiving user generates an SDP response and sends it back to the initiator via the blockchain;
   - both users collect ICE candidates through blockchain nodes, which act as STUN and TURN servers.
   - users establish a peer-to-peer connection, traversing NAT and avoiding censorship, thanks to the decentralized nature of the blockchain;
   - communication is secured using encryption and security key, which provides an additional level of protection;
   - users are paired and can communicate via WebRTC, benefiting from all the advantages of VOBP, including anti-censorship and improved security.
   - the WebRTC connection process is integrated with the mobile wallet application and the decentralized identity module, enabling secure identity management and encrypted communication.

The system and method according to the invention have the following advantages:
- provide decentralized communication through blockchain emails and chats while maintaining the immutability and trust inherent in blockchain technology;
- private keys are protected by advanced encryption and data protection technologies
- cryptographic operations are performed without revealing the value of the key itself, thus ensuring an additional level of security;

- make it possible for only legitimate users to have access to encrypted e-mail and chat services, their personal data being protected against unauthorized access or falsification;
- remove the need for a central identity management entity, which leads to a higher autonomy and improved security of user data;
- ensure the compliance with eIDAS standards, which proves to users that the solution proposed for patenting complies with the standards and rules imposed by the European Union in the field of digital identity and cyber security;
- all transactions and data are transparently recorded, providing a clear and verifiable audit trail. The flexibility and extensibility of blockchain allows the system to adapt and expand with various applications and requirements, including integration with WebRTC to improve peer-to-peer communication and combat censorship.

Next, an example of the invention is given, in relation to figures 1-5, which represent:
- figure 1 - VOBP (Voice Over Blockchain Protocol) connection between two people;
- figure 2 - the content of a decentralized identity;
- figure 3 - the typical content of a decentralized identity document;
- figure 4 - SSO authentication process;
- figure 5 - hierarchy of BIP44 deterministic keys.

The system, according to the invention, works on the basis of blockchain technology and is intended for the management of decentralized digital identities, secure communication and compliance with eIDAS standards in the European Union.

In traditional peer-to-peer communication systems such as WebRTC, one of the challenges is traversing Network Address Translation (NAT). When a device is behind a NAT, it can be difficult for other devices to establish a direct connection to it. Although protocols such as STUN (Session Traversal Utilities for NAT) and TURN (Traversal Using Relays around NAT) can help, they still rely on centralized servers and do not completely solve the problem.

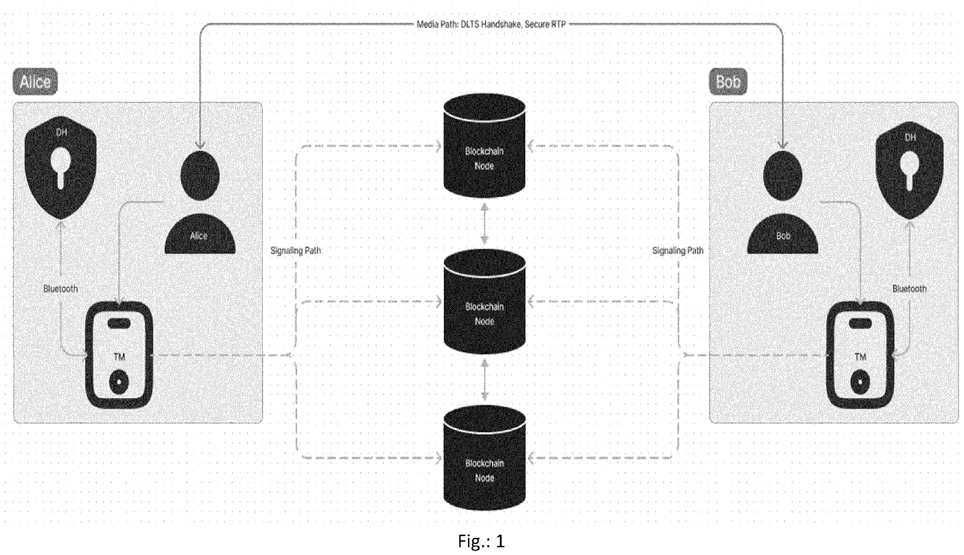

The decentralized virtual identity management system and method according to the invention overcomes this problem by using a decentralized protocol designed to replace traditional VoIP (Voice over IP) communication systems with a new standard, called VOBP (Voice Over Blockchain Protocol), according figure 1.

The system, according to the invention, consists of the following functional blocks:
** a DH hardware device that represents the physical component of the system. This is represented by a physical token device capable of generating and storing public and private keys associated with the digital identity of at least one user. The DH hardware device connects to the personal mobile terminal of the user who wants to generate a decentralized digital identity. The DH hardware device uses advanced encryption and data protection technologies to ensure that no unauthorized person can access or extract the private encryption keys stored on it. The DH device allows cryptographic operations to be performed without revealing the value of the encryption key itself, thus providing an additional level of security. Public and private keys associated with digital identities are essential in asymmetric cryptography, where the public key is used to encrypt messages and verify digital signatures, and the private key is used to decrypt and sign messages.

The identity of each user is linked to a pair of cryptographic keys, consisting of a private and a public key. The private key, kept safe within the FIPS 140-02 certified security key, is used to sign transaction requests, while the public key is used by the nodes of the blockchain network to verify the digital signature. This decentralized authentication method allows users to control and recover their identity without depending on centralized services.
** a MAP (decentralized ledger) mapping module. This module has the role of making correspondence between users' e-mail addresses with decentralized digital identities / decentralized identifiers ID. A user can have one or more email addresses but only one decentralized identity ID. The MAP mapping module provides system users, according to the invention, with a means of accessing and identifying decentralized identities within the blockchain network. Each user can link one or more email addresses to their decentralized digital identity ID. The way the MAP mapping module works is similar to the Domain Name System (DNS) which associates domain names with their corresponding Internet Protocol (IP) addresses. Just as DNS "translates" domain names into IP addresses, the MAP mapping module performs the conversion between e-mail addresses and decentralized identifiers IDs.

The MAP mapping module is integrated within the blockchain and works similar to a Domain Name Service (DNS) or Ethereum Name Service (ENS) to facilitate user discovery at the initial stage of VOBP signaling . To better understand the operation of the MAP mapping module, the main operations performed by it are described below:
1. How DNS works: A Domain Name Service (DNS) is a decentralized system that translates easy-to-remember domain names, such as "www.example.com," into numeric IP addresses, which are used by computers to identify the servers. This allows users to access websites using familiar names instead of entering complex IP addresses. DNS works like a phone book for the Internet, linking domain names to their corresponding IP addresses.
2. Applying DNS Principles in the Blockchain: The MAP mapping module applies DNS principles in the blockchain context, enabling the association of decentralized ID identities with online identifiers such as email addresses or social media accounts. This makes IDs and addresses of wallets, which are difficult to share and remember, to be accessible through more familiar and easy-to-use identifiers.
3. Benefits of Blockchain Integration: Integrating the MAP mapping module with the blockchain brings the benefits of decentralization, security and transparency. Users have full control over the information they share, and data is stored in a way that prevents unauthorized manipulation. This blockchain-friendly discovery system facilitates peer-to-peer communication and promotes the adoption of VOBP technology.
4. Integration with Other Modules: The MAP mapping module interacts with other modules of the system, including the decentralized identity module MID and the mobile application, providing a coherent and efficient user experience.
5. Facilitating Peer-to-Peer Communication: By simplifying the user mapping process, the MAP mapping module helps facilitate peer-to-peer communication and promote the adoption of VOBP technology.
   ** an MC communication module dedicated to managing the creation, sending and receiving of encrypted e-mails and chats on the blockchain. Encryption is performed using public and private keys stored on the DH token hardware device and ensures the confidentiality and authenticity of messages transmitted between users. By implementing communication on the blockchain, a high degree of security and integrity of information is ensured. The MC communication module is equipped with encryption technologies to ensure the confidentiality and integrity of communications, protecting users against eavesdropping and other types of attacks. The MC communication module can use IPFS (InterPlanetary File System), through which files can be accessed and shared without depending on centralized servers. Using IPFS allows email content to be stored, ensuring its availability even if the email provider is unavailable.
   ** an MConf compliance module provided with eIDAS (Electronic Identification, Authentication, and Trust Services) that achieves compatibility with the European Union eIDAS standards. The integration of eIDAS ensures that the solution complies with the standards and and the rules imposed by the European Union in the field of digital identity and cyber security. The Mconf compliance module ensures the recognition of digital identities created and managed by the system according to the present invention by public services in other member states of the European Union, which ensures the possibility of wide-scale implementation and interoperability.
   ** a MID decentralized identity module that manages the creation, update and deletion of decentralized identities using blockchain technology. The decentralized identity module MID associates a DID (Decentralized Identifier) type document with a did:com address allowing the management of identities and their historicization. The DID document associated with the did: com address contains information related to the user's identity and is used to verify the user's authenticity and credentials.

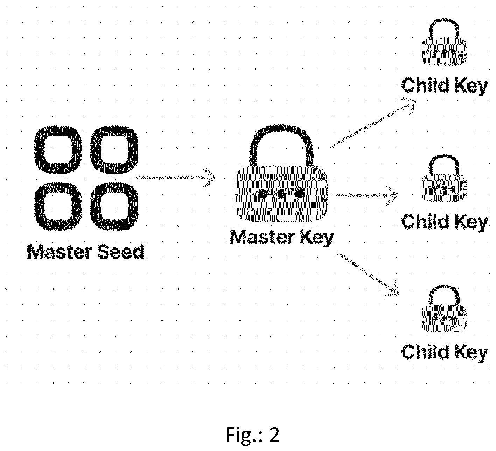

The MID Decentralized Identity Module is essential for managing identities in the blockchain network. A decentralized identity ID, according to Figure 2, is a plain text string composed of three parts: 1) the URL scheme identifier did, 2) the identifier for the DID method, and 3) the identifier specific to the DID method. In the context of the present invention, the blockchain wallet address is used as the did: com: identifier, given that the present implementation is based on the Cosmos SDK and includes a specific prefix.

The MID Decentralized Identity Module handles the creation, update and deletion of decentralized identities on the blockchain by associating a DID document with an address of type did:com:12345678asdasdads. The DID document, stored on the blockchain, contains essential information related to the user's identity, which is used to verify DID credentials. This approach enables transparent and secure identity management, logging and tracking of changes.

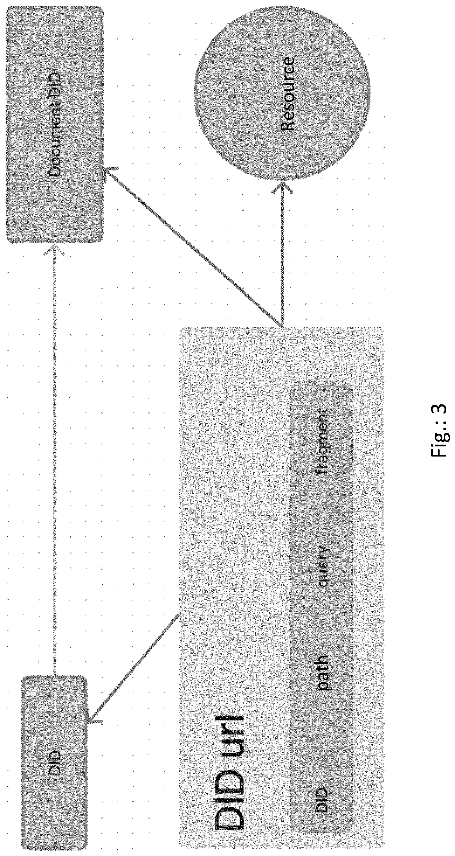

A DID document, according to Figure 3, is a standardized data structure that contains information related to a decentralized identifier ID. It serves as a link between the DID and how the ID can be used. The DID document is stored on the blockchain and can be accessed and verified by anyone with access to the network.

Here's what a DID document typically contains, as shown in Figure 3:
1. ID Identifier: A unique string that identifies the subject of the ID (typically the user or entity associated with the ID).
2. Public Keys: The DID document includes one or more public keys, which can be used to verify digital signatures and encrypt communications.
3. Service Endpoints: These are URLs or other descriptors that indicate how the ID subject can communicate. For example, they may include addresses for messaging, web services or other communication channels.
4. Metadata and Attributes: The DID document may also contain other metadata or attributes related to the ID subject, such as names, email addresses, organizational affiliations, or any other information relevant to the identity.
5. Access Control and Permissions: The DID document can also define rules and permissions for who can access or modify the document, providing granular control over identity management.
6. History and Versions: In some implementations, the DID document may also include a history of changes and previous versions, allowing tracking and auditing of changes.

** a Single Sign-On / Two-Factor Authentication AUT authentication module that combines two-factor authentication (2FA) and Single Sign-On authentication (SSO). With two-step authentication, users must provide two different credentials to prove their identity. These elements can be: something the user knows (password, pin), something the user has (token, mobile device, physical security key), or something the user is (fingerprint, retina).

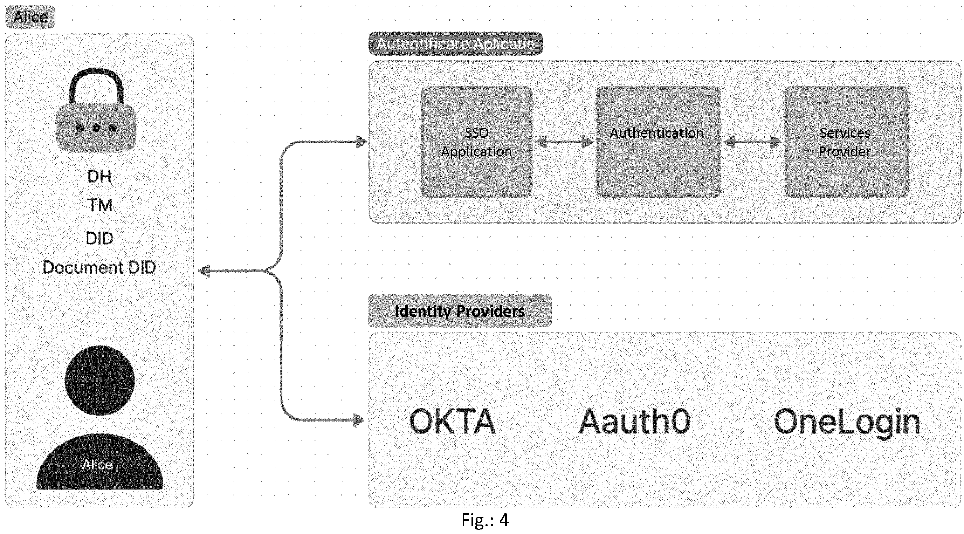

The AUT authentication module, according to Figure 4, uses a security key through WebAuthn and involves the following operational steps:
a) Authentication Initiation: The user accesses an application or service that requires authentication. The application requests SSO authentication and redirects the user to the centralized authentication service, which uses the protocol proposed in the present invention.
b) Security Key Request: The authentication service requires the user to enter the security key, which is equipped with a FIPS 140-02 compliant TPM and communicates over the proprietary Bluetooth encrypted channel.
c) Request Generation and Verification: The MID decentralized identity module generates an authentication request, using the did:com: identifier specific to the Cosmos SDK blockchain. The security key signs the request and the authentication service verifies the signature using the public key associated with the decentralized identity ID.
d) Identity Verification with Block chain: The authentication service verifies the user's identity with the DID document stored on the blockchain, ensuring that the information is correct and up-to-date.
e) SSO Token Generation: After successful verification, the authentication service generates an SSO token, which is digitally signed to ensure integrity.
f) Redirect to Application: The user is redirected back to the original application with the SSO token included. The application verifies the token and grants access.
g) Access to Other Services: The SSO token allows the user to access other services and associated applications without requiring repeated authentication.
h) Integration with the Wallet and MID Module: The SSO process is integrated with the mobile wallet application and the MID module of this patent application, enabling secure identity management and encrypted communication.
i) Additional Security with Security Key: Security Key provides an additional level of security, protecting against identity theft and phishing attacks.

The security key cold storage solution used by the present invention consists of keeping the private keys in a physical environment isolated from the Internet and other potentially compromised networks. The FIPS 140-02 certified Security Key implements this solution by providing a dedicated hardware device that stores keys in a way that isolates them from cyber attacks.

The DH hardware device according to the invention securely stores the private keys associated with a user's digital identity. Private keys cannot be accessed or extracted by unauthorized persons. Cryptographic operations are performed without revealing the value of the key itself. The approach combines the advantages of a secure physical device with the flexibility and accessibility of a mobile application, creating a robust and innovative solution for the secure future of digital communication. The DH hardware device of the invention is compatible with a variety of devices and platforms. Through an encrypted Bluetooth connection, the DH hardware device can communicate with mobile phones, tablets, computers and other compatible devices, providing strong authentication and cryptographic operations in a variety of contexts.

In the decentralized system according to the invention, the security key can be used as an authentication element in the second authentication step. The user enters his password and then must provide the security key, which can be a hardware device or a special mobile application (credentials), to complete the authentication process.

Single Sign-On (SSO) allows users to sign in once and then access multiple applications or services without having to re-enter their login credentials for each one.

Within the decentralized system, according to the invention, users can use the security key to authenticate only once, subsequently having automatic access to various applications and services, managed in the decentralized virtual environment.

The system according to the invention is built on the basis of a blockchain-type network that has the intrinsic ability to provide privacy, robustness and security. Every transaction is validated and recorded across multiple nodes in the network, creating an immutable and transparent history that makes any attempt at fraud or data manipulation difficult.

By using encryption and decentralized authentication, blockchain allows users to control and protect their data without depending on a central authority, which significantly reduces the risk of compromise or abuse.

All transactions and data are transparently recorded, providing a clear and verifiable audit trail. The flexibility and extensibility of the blockchain allows it to be adapted and extended to suit various applications and requirements, including integration with WebRTC to improve peer-to-peer communication and combat censorship. Users and stakeholders can confidently verify the authenticity and history of transactions without relying on third-party intermediaries. This transparency is particularly beneficial in scenarios where trust is paramount, such as financial transactions, legal agreements, and identity verification. In the context of integrating with WebRTC, this adaptability becomes a powerful tool in improving peer-to-peer communication. By leveraging blockchain technology, WebRTC communications can be made more secure and resistant to censorship and surveillance. This integration is especially vital in environments where freedom of speech is at risk or where users require secure and private channels of communication. The difference between using a decentralized ledger, decentralized ledger, and a centralized one is that it eliminates the existence of a central point of control to own and manage the entire system. In the case of the present system, data and transactions are distributed and stored across multiple independent nodes that work collaboratively to maintain the integrity and security of the network. The integration of the previously mentioned modules in an integrated system, according to the invention, leads to the realization of a secure, decentralized platform compatible with EU regulations for the management of digital identities and encrypted communication.

The decentralized identity management method according to the invention eliminates single points of failure and contributes to the creation of a distributed system look more secure and with better resilience to cyber attacks.

The method, according to the invention, presents the following operational steps:
- step 1: enrollment and generation of decentralized identities - the user takes possession of the token and installs a mobile application dedicated to the system, according to the invention. Through the mobile app, the user is instructed to enroll and following this process, a decentralized identity is created using blockchain technology. This involves creating public and private keys, which are automatically saved on the token. Specific to the present invention, the token does not allow private keys to be extracted.

Throughout the use of the system and method according to the invention, the token is connected to the user's mobile terminal. The public key is recorded in the blockchain ledger.
- step 2: authentication and authorization - to carry out transactions or to access the dedicated virtual environment, through the software application specific to the present invention, the user must authenticate. Using the token connected to the mobile terminal on which the mobile application is installed, the user proves that he owns the private key associated with the decentralized identity by providing a valid digital signature. The system will verify the digital signature using the public key stored in the blockchain ledger and authorize the user to perform the desired transactions in the virtual environment.

The token can be connected to the device's mobile terminal either wirelessly, via Bluetooth technology, or physically using the terminal's USB port.

Decentralized authentication is based on blockchain technology, which allows validation and verification of identity without depending on a central authority. Each user controls their own credentials and data, and the authentication process is done through the nodes in the network. This means that no third party owns or controls sensitive information, thereby reducing the risk of abuse or theft.
- step 3: use of decentralized virtual identities - system users can assign one or more e-mail addresses for their own decentralized identity. Users can search for decentralized identities of other users by entering at least one email address using the MAP mapping module that maps users' email addresses to their decentralized identities, a search option available to all users of the system.

Each user is the own administrator of the personal data entered into the system.
- step 4: virtual trading - authenticated users in the dedicated virtual environment use the decentralized identity instead of a traditional username. Their transactions are recorded in the blockchain ledger, ensuring data transparency and immutability.

The method, according to the invention, allows the use of e-mail and / or chat services, the transfer of documents, the trading of virtual currencies using decentralized identities in a system where public keys are saved in the ledger of a blockchain and private keys in a token type device that ensures their integrity and confidentiality.

The process of generating a decentralized identity ID (Decentralized Identifier) from a mnemonic, turning it into a seed, then into a master key, creating a wallet for managing decentralized identities, and sending a DID document to the blockchain registry can be described so:
a) mnemonic generation: the user uses the capabilities of the security key to generate random numbers, which are then used to create a mnemonic according to the standardized BIP-39 algorithm. This mnemonic is a passphrase that will be used to derive the private key;
b) transformation into seed: the mnemonic is transformed into a cryptographic seed using a hash function and possibly an additional password. This process complies with the BIP-39 standard;
c) master key derivation: the seed is used to derive a master key using the BIP-32 algorithm. This master key will be the root of the key hierarchy for the wallet that manages decentralized identities;
d) creating the wallet that will manage decentralized identities: the master key is used to create a decentralized identity management wallet that will manage the user's decentralized keys and identities. The wallet can be stored in a security key with a FIPS 140-02 compliant TPM for additional security;
e) DID address generation: using the Cosmos SDK blockchain-specific master key and structure, a unique DID address with the did:com: prefix is generated.
f) creation of the DID document: a DID document is created which c holds information related to the user's identity, including public keys, associated services, and other metadata. The DID document is formatted according to the standard set by
   https://www.w3.org/TR/did-core/
g) sending the DID document to the blockchain: the DID document is digitally signed with the associated private key and sent to the blockchain. The blockchain will act as a ledger for all DID documents.
h) blockchain verification and registration: blockchain nodes verify the signature and integrity of the DID document and record it in the blockchain. This process ensures the immutability and transparency of decentralized identities.
i) managing and updating DID documents: the user can manage and update the DID document through the DID wallet, using the security key and the proposed protocol for authentication and cryptographic operations.

The method, according to the invention, allows credentials to be stored in an encrypted and secure form on the blockchain. Users can verify their identity by digitally signing requests, and nodes in the network validate these signatures. This process ensures data confidentiality and integrity and enables fast and efficient authentication.

Another advantage of the decentralized authentication method is resistance to censorship and interference. With no central authority that can be attacked or compromised, the system remains functional even under attack or government restrictions. This improves the availability and accessibility of services, promoting digital freedom and autonomy.

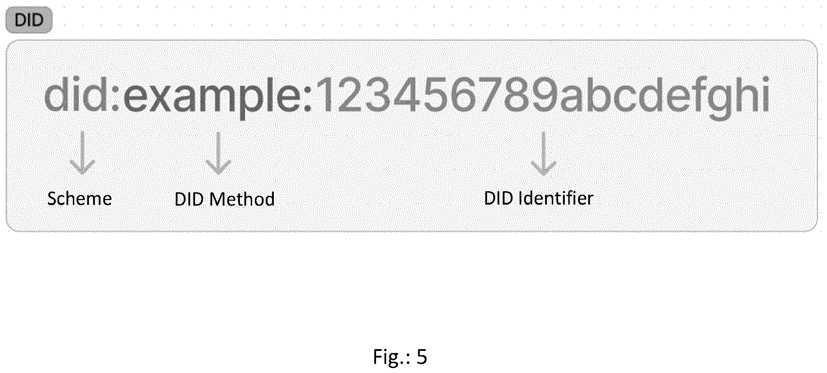

A key aspect of the proposed decentralized authentication method is the use of blockchain standards such as BIP32 and mnemonics to allow the user to retrieve and control their identity. The HD (Hierarchical Deterministic) wallet implementation is a byproduct of several Bitcoin Improvement Proposals (BIPs), notably BIP32 for basic cryptography and key generation, BIP39 for seed phrase and recovery, and BIP44 for multi-protocol account hierarchy , see figure 5. Unlike centralized services, where access to a phone number, email address or other data can be restricted or cut off, in this system the user is the true owner of his identity. The method, according to the invention, achieves the integration of WebRTC technology with that of blockchain technology through two essential components: signaling and candidate collection

ICE (Interactive Connectivity Establishment), as can be seen in figure 1.

Signaling is the process by which peer-to-peer connections are established in WebRTC.

Blockchain is used for signaling because it already performs this function by connecting and discovering nodes in the network. This means that signaling becomes more robust and decentralized, eliminating reliance on central servers and reducing vulnerabilities. The collection of ICE candidates plays a crucial role in the network, as nodes will implement STUN and TURN servers. Each node will function and act as a TURN server, facilitating discovery and connection between pairs. This significantly improves NAT traversal and makes the network more resistant to blocking and censorship.

With these changes, the WebRTC protocol is enhanced to match today's security, privacy, and freedom of communication requirements. Blockchain integration transforms the signaling and collection of ICE candidates while keeping the rest of the protocol unchanged. The result is an innovative solution that improves upon WebRTC, providing a more secure, freer, and more resistant to interference and censorship communication platform.

The process of establishing a WebRTC connection and pairing can be described as follows, referring to the specific modules and components of the present invention, according to Figure 1:
1. Connection Initiation: A user initiates a communication request (eg video call) to another user through the application implementing the proposed VOBP (Voice Over Blockchain Protocol).
2. Discovering and Connecting to Blockchain Nodes: The application uses the blockchain module to discover and connect to relevant blockchain nodes. Each blockchain node acts as a TURN server, replacing traditional TURN servers.
3. Generating and Sending SDP Offer: The initiating user generates an SDP (Session Description Protocol) offer and sends it to the recipient via the blockchain, using the specific did: com: identifier.
4. Authentication and Identity Verification: Both users authenticate each other using the decentralized authentication method of the present invention, involving the security key and the decentralized identity module MID.
5. Generation and Submission of Res SDP response: The receiving user generates an SDP response and sends it back to the initiator via the blockchain.
6. Collecting ICE Candidates: Both users collect ICE (Interactive Connectivity Establishment) candidates through blockchain nodes, which act as STUN and TURN servers.
7. Peer-to-Peer Connection Establishment: Users establish a peer-to-peer connection, traversing NAT and avoiding censorship, due to the decentralized nature of the blockchain.
8. Secure Communication with Security Key: Communication is secured using encryption and security key, which provides an additional level of protection.
9. Pairing and Communication: Users are paired and can communicate via WebRTC, benefiting from all the advantages of VOBP, including anti-censorship and improved security.
10. Integration with Wallet and MID Decentralized Identity Module: The WebRTC connection process is integrated with the mobile wallet application and MID Decentralized Identity Module, enabling secure identity management and encrypted communication.

The decentralized digital identity management system and method according to the invention uses a mobile e-wallet application that is the users' access point to the blockchain network and identity management system.

It allows users to create and manage decentralized identities, communicate securely through encrypted emails and chats, and interact with the blockchain to perform various operations.

Deploying the mobile application requires the use of a specific hardware component, a security key that implements a TPM from a FIPS 140-02 approved SoC chip. This TPM is a microcontroller that stores cryptographic keys specific to a host, ensuring the integrity of a system's hardware and software and protecting cryptographic keys. It can generate, store and limit the use of cryptographic keys, detecting and protecting against attempts to modify software or hardware.

The wallet application must be specifically designed for the protocol disclosed in the present invention to communicate with the security key via Bluetooth. It enables seamless and secure integration between software and hardware components, providing a complete solution for identity management and decentralized communication.

FIPS 140-02 (Federal Information Processing Standard) is a government standard for validating cryptographic modules and is recognized for its strict requirements for data security and integrity. Implementing a TPM (Trusted Platform Module) that is FIPS 140-02 compliant within our hardware solution brings a high level of security and trust.

A FIPS 140-02 compliant TPM is designed to provide robust protection for cryptographic keys. Private keys cannot be extracted from the TPM, but can only be used inside it to sign or verify digital signatures. This means that even in the event of a successful attack on the system, an attacker would not be able to extract the private keys for fraudulent use.

The TPM stores the keys in an encrypted and secure form, and uses them in cryptographic operations without exposing them off-chip. This makes it highly resistant to physical and software attacks, including attempts to inspect or modify hardware or software.

The TPM can also generate cryptographic keys on-chip, ensuring that they are not exposed at any point in the generation process.

It can also perform authentication, encryption and decryption operations, and manage certificates and credentials in a way that meets the strict security requirements of the FIPS 140-02 standard. The working process of the mobile application, which serves as a bridge between the cold wallet (cold wallet) via Bluetooth and the blockchain solution, can be described as follows:
1. Bluetooth Connection Initiation: The user opens the mobile app, which initiates a Bluetooth connection with the cold wallet. This connection is secured through a proprietary encrypted channel.
2. Security Key Authentication: The user authenticates to the application using the security key from the cold wallet, which contains a FIPS 140-02 compliant TPM. This process ensures that only the authorized user can access the wallet.
3. Interacting with the Blockchain: The mobile application allows the user to interact with the blockchain, including sending and receiving transactions, managing decentralized IDs, and performing other blockchain-specific operations.
4. Signing Cold Wallet Transactions: For any transaction that requires digital signature, the mobile application sends data to the cold wallet via Bluetooth. The cold wallet signs the transaction using the securely stored private key and sends the signature back to the mobile app.
5. Transmission of Signed Transactions to the Blockchain: The mobile application transmits the signed transaction to the blockchain network, where it is verified and recorded by the nodes of the network.
6. Decentralized Identity Management: The mobile application allows the user to manage decentralized identities and initiate and receive WebRTC communications through the VOBP protocol, using blockchain nodes as TURN servers. (hand-shaking part only)
7. Key Generation and Management: The mobile application may request the cold wallet to generate and manage keys, provide a secure random number, and perform other cryptographic operations, all in accordance with relevant standards.
8. Updates and Synchronization with the Blockchain: The mobile application regularly synchronizes with the blockchain to reflect the current state of the user's account, transactions and decentralized identities.
9. Closing the Bluetooth Connection: After the operations are completed, the Bluetooth connection with the cold wallet is securely closed.

## Claims

1. A decentralized digital identity management system arrangement using blockchain technology, comprising::
- a hardware device (DH) represented by a physical token-type device, arranged to generate and store public and private keys associated with the digital identity of at least one user, wherein the hardware device (DH) communicates with a mobile terminal (TM) operated by to generate a decentralized digital identity;
- a mapping module (MAP) arranged to carry out correspondence between users' e-mail addresses with decentralized digital identities and/ or decentralized identifiers (DID);
- a communication module (MC) arranged to manage the creation, sending and receiving of encrypted e-mails and/ or chats through a blockchain network and based on the encryption made using the public and private keys stored on the token-type hardware device (DH);
- a compliance module (MConf) provided my means of a "Electronic Identification, Authentication and Trust Services" module that ensures the recognition of digital identities created and managedthrough a further connectively coupled module;
- a decentralized identity module (MID) arranged to create, update and/ or delete decentralized identities using blockchain technology by associating a DID type document with a did: com address, a document containing information related to the user's identity and used to verify the user's authenticity and credentials; and
- an authentication module (AUT) arrenaged to combine two-step authentication and one-time authentication that enables secured management of decentralized identities and encrypted communication. re

2. The system according to claim 1, **characterized in that** the hardware device (DH) is arranged to perform cryptographic operations and/ or reveal the value of the encryption key itself.

3. The system according to claim 1 or 2, **characterized in that** the identity of each user is linked to a pair of cryptographic keys, consisting of a private key, kept safe within the FIPS 140-02 certified security key, used to sign requests for transaction, and a public key, used by the nodes of the blockchain network, to verify the digital signature.

4. The system according to any one of the preceding claims, **characterized in that** the address of the blockchain wallet within the decentralized identity module (MID) represents the did: com identifier.

5. The system according to any one of the preceding claims, **characterized in that** a document containing information related to a decentralized identity (DID) is stored on the blockchain and is accessed and verified by any user of the network.

6. The system according to any one of the preceding claims, **characterized in that** the authentication module (AUT) uses a security key through WebAuthn and verifies the identity of a user with the help of the document containing the information related to a decentralized identity (ID) stored on the blockchain.

7. The system according to any one of the preceding claims, **characterized in that** the security keys are stored in a physical environment, isolated from the Internet and other potentially compromised networks and the cryptographic operations performed do not reveal the value of the key itself.

8. The system according to any one of the preceding claims, **characterized in that** the hardware device (DH) is compatible with a variety of devices and platforms and, by means of an encrypted Bluetooth connection, can communicate with mobile phones, tablets, computers and/ or further compatible devices.

9. A decentralized digital identity management method, comprising:
- enrollment of decentralized identities carried out by using the hardware device (DH) and installing an electronic wallet-type mobile application that represents the access point for users to a blockchain-type network and to the identity management system;
- user authentication and authorization, using a public key stored in a blockchain register and associated with the decentralized identity created in the previous step for verifying the digital signature;
- interaction with the blockchain network is carried out through the mobile application arranged to allow the user to send and receive transactions, manage decentralized identities (ID) and perform other operations specific to the blockchain;
- virtual transactions of users authenticated in the previous step are carried out, including the use of e-mail and/or chat services, document transfer, virtual currency trading, all of which are carried out with the assurance of their integrity and confidentiality;
- transactions are signed by using the mobile application that sends the data to the cold wallet, either through a physical connection or through a Bluetooth wireless connection; the cold wallet signs the transaction using the securely stored private key and sends the signature back to the mobile app;
- the signed transactions are sent to the blockchain network where each transaction is verified and recorded in the network nodes;
- periodic synchronization of the mobile application with the blockchain network is carried out to reflect the current state of the account, transactions and decentralized user identities; and
- the connection with the cold wallet is closed after the transactions are completed.

10. The method according to claim 9, **characterized in that** the mobile application can allow users to manage decentralized identities (IDs) and initiate and receive WebRTC communications via a VOBP protocol, using blockchain network nodes as TURN servers.

11. The method according to any one of claims 9 to 10, **characterized in that** the mobile application requests the cold wallet to generate and manage keys, provides a secure random number and/ or performs cryptographic operations.

12. The method any one of claims 9 to 11, **characterized in that** the generation of a decentralized identity (ID) comprises:
- a mnemonic is generated according to the standardized BIP-39 algorithm using the capabilities of the security key to generate random numbers;
- the mnemonic is transformed into a cryptographic seed using a hash function;
- the seed is used to derive a master key using the BIP-32 algorithm; the master key will be the root of the key hierarchy for the decentralized identity wallet;
- using the main key and the specific structure of the Cosmos SDK blockchain, a unique DID address is generated;
- a DID document is created that contains information related to the user's identity, including public keys, associated services and other metadata;
- the DID document is digitally signed with the associated private key and sent to the blockchain; the blockchain will act as a registry for all DID documents;
- blockchain nodes verify the signature and integrity of the DID document and record it in the blockchain to ensure the immutability and transparency of decentralized identities; and/ or
- the user updates the DID document through the wallet that manages decentralized identities, using the security key and the proposed protocol for authentication and cryptographic operations.

13. The method any one of claims 9 to 12, **characterized in that** an integration of WebRTC technology with that of blockchain technology by means of two essential components is performed: signaling, to establish connections between pairs in WebRTC and collecting ICE candidates, to improve NAT traversal and making the network more resistant to blocking and censorship.

14. The method any one of claims 9 to 13, **characterized in that**, to implement the mobile wallet application, it is necessary to use a specific hardware component, a security key that implements a TPM from an S-chi oC approved by FIPS 140-02.

15. The method any one of claims 9 to 14, **characterized in that** the integration of WebRTC technology is done following the following operational steps:
- a user initiates a communication request to another user through the application that implements the VOBP protocol;
- each blockchain node acts as a TURN server, replacing traditional TURN servers;
- the initiating user generates an SDP offer and sends it to the recipient via the blockchain, using the specific did: com: identifier;
- both users authenticate each other using the decentralized authentication method, involving the security key and the decentralized identity module (MID);
- the receiving user generates an SDP response and sends it back to the initiator via the blockchain;
- both users collect ICE candidates through blockchain nodes, which act as STUN and TURN servers.
- users establish a peer-to-peer connection, traversing NAT and avoiding censorship, thanks to the decentralized nature of the blockchain;
- communication is secured using encryption and security key, which provides an additional level of protection;
- users are paired and can communicate via WebRTC, benefiting from all the advantages of VOBP, including anti-censorship and improved security, and/ or
- the WebRTC connection process is integrated with the mobile wallet application and decentralized identity (MID) module, enabling secure identity management and encrypted communication.
